# EUROPÄISCHE PATENTANMELDUNG

(11) **EP 1 518 611 A2**
(43) Veröffentlichungstag der Anmeldung: **30.03.2005**
(21) Anmeldenummer: 04023175.5
(22) Anmeldetag: 29.09.2004
(51) Int. Cl.: B07C 5/02

(54) **Verfahren und Vorrichtung zum Sortieren von vereinzelten Prüflingen mittels Bildverarbeitung**

(30) Priorität: 29.09.2003 DE 10345574; 19.05.2004 DE 102004025286
(71) Anmelder: visicontrol Gesellschaft für elektronische Bildverarbeitung mbH, 88250 Weingarten (DE)
(72) Erfinder: Heiberger, Lothar, 88279 Amtzoll (DE); Fischer, Stephan, 88214 Ravensburg (DE); Jauch, Volker, 88255 Baienfurt (DE)
(74) Vertreter: Patentanwälte Eisele, Otten, Roth & Dobler

(57) **Zusammenfassung**

Die vorliegende Erfindung betrifft eine Vorrichtung (1) und ein Verfahren zum Betrieb der Vorrichtung zum Sortieren von vereinzelten Prüflingen (8) mittels Bildverarbeitung, insbesondere von schüttbaren Werkstücken, wie Schrauben und dergleichen, welche mittels einer Zuführvorrichtung (6) zugeführt werden. Die Erfindung zeichnet sich dadurch aus, dass mittels einer zwischen der Zuführvorrichtung (6) und einer Position zur Bildverarbeitung angeordneten Förderstrecke (2) auf die Transportbewegung der Prüflinge (8) eingewirkt wird.

## Beschreibung

Die vorliegende Erfindung betrifft eine Vorrichtung und ein Verfahren zum Sortieren von vereinzelten Prüflingen nach den Oberbegriffen der Ansprüche 1 und 2.

Bei der Herstellung von Werkstücken, insbesondere von schüttbaren Werkstücken, wie schaftlastigen oder kopflastigen Schrauben, Muttern und dergleichen, besteht die Notwendigkeit, diese auf Qualitätskriterien hin zu überprüfen. Als Qualitätskriterien kommen beispielsweise die Abmessungen, die Formen oder Konturen der gesamten Prüflinge oder Teile der Prüflinge in Frage. Eine bevorzugte Prüfmethode baut auf der Bildverarbeitung auf, bei der die Prüflinge beispielsweise durch eine Kamera erfasst und auf die vorgegebenen Qualitätskriterien hin überprüft werden.

Die Prüflinge werden dabei mittels einer Zuführvorrichtung einem Prüf- und/oder Sortiersystem zugeführt, welches mit einer Bildverarbeitung ausgerüstet ist. Diese Prüf- und/oder Sortieranlagen laufen vielfach autonom, vorzugsweise über das Wochenende, so dass auftretende Störungen gegebenenfalls die gesamte Anlage zum Erliegen bringen.

Probleme für den ordnungsgemäßen Ablauf des Prüf- und/oder Sortierverfahrens treten bei bekannten Sortier-Vorrichtungen beispielsweise bei der Übergabe der Prüflinge von der Zuführvorrichtung an die Prüf- und/oder Sortiervorrichtungen auf. So kommt es beispielsweise bei scheibenförmigen Zuförderern, die entsprechende Ausnehmungen für die Aufnahme der Prüflinge aufweisen, im Übergabebereich immer wieder zu Komplikationen, wie Verstopfungen im Förderfluss der Prüflinge.

Um eine verbesserte Zuführung der Prüflinge an die Prüfund/oder Sortiervorrichtung zu erreichen, wurde auch schon versucht, über Linearförderer, beispielsweise über Vibrationsförderer Prüflinge der Prüf- und/oder Sortiervorrichtung zuzuführen. Dabei besteht jedoch die Problematik, dass die Prüflinge entsprechend den Amplituden und Frequenzen des Vibrationsförderers instabile Förderbewegungen aufweisen, die sich negativ auf die Bildverarbeitung auswirken.

So kommt es häufig vor, dass sich Prüflinge bei der Zufuhr so dicht aneinander schmiegen, dass sie keinen ausreichenden Abstand zueinander für die Bildverarbeitung haben, um die geforderten Qualitätskriterien einwandfrei überprüfen zu können. Weitere Probleme treten dahingehend auf, dass die Prüflinge entweder in ihrer Lage oder in ihrer Förderbewegung zum Teil sehr instabil sind und dadurch ebenfalls einen fehlerfreien Prüf- und/oder Sortierprozess verhindern.

Aufgabe der vorliegenden Erfindung ist es, die nachteiligen Auswirkungen nach dem Stand der Technik zu verringern.

Die Lösung der gestellten Aufgabe erfolgt durch die technische Lehre der Patentansprüche 1 und 2.

Aus den Merkmalen der Unteransprüche gehen weitere, vorteilhafte Ausführungen und Weiterentwicklungen hervor.

Erfindungsgemäß ist ein Verfahren für den Betrieb einer Vorrichtung zum Sortieren von vereinzelten Prüflingen mittels Bildverarbeitung, insbesondere von schüttbaren Werkstücken, wie Schrauben und dergleichen, welche mittels einer Zuführvorrichtung zugeführt werden, dadurch gekennzeichnet, dass mittels einer zwischen der Zuführvorrichtung und einer Position zur Bildverarbeitung angeordneten Förderstrecke auf die Transportbewegung der Prüflinge eingewirkt wird.

Durch diese Förderstrecke ist es möglich, gezielt auf die einzelnen Prüflinge in ihrer Förderbewegung einzuwirken und sie zu stabilisieren. Dadurch kann eine Überprüfung der Qualitätskriterien mittels Bildverarbeitung mit gegenüber dem bisher bekannten Stand der Technik deutlich erhöhten Stückzahlen im Durchsatz erreicht werden. Der Stand der Technik, bei dem die Zuführung beispielsweise über Scheibenförderer erfolgt, liegt in der Größenordnung von etwa 600 Stück pro Minute. Nach dem erfindungsgemäßen Verfahren wurden bereits Durchsätze von 1260 Stück pro Minute erreicht.

Der Durchsatz richtet sich allein nach der Prüfzeit und Messzeit des Bildverarbeitungssystems. Da die Förderstrecke keine Störknoten - welche den Teilefluss behindern könnten - enthält, sind Durchsätze bis max. der zugeführten Förderleistung möglich.

Für die Durchführung des erfindungsgemäßen Verfahrens wird eine Vorrichtung zum Sortieren von vereinzelten Prüflingen mittels Bildverarbeitung, insbesondere von schüttbaren Werkstücken, wie Schrauben und dergleichen, welche mittels einer Zuführvorrichtung zugeführt werden, vorgeschlagen, die dadurch gekennzeichnet ist, dass zwischen der Zuführvorrichtung und einer Position zur Bildverarbeitung eine Förderstrecke zur Einwirkung auf die Transportbewegung der Prüflinge vorgesehen ist.

Diese Förderstrecke bewirkt eine Stabilisierung in der Zuführbewegung der Prüflinge, so dass diese prozesssicher auf die vorgegebenen Qualitätskriterien hin überprüft werden können.

In einer bevorzugten Ausführungsform ist es vorgesehen, dass an der Förderstrecke Stabilisierungsmittel zur Beeinflussung der Lage und/oder der Transportgeschwindigkeit und/oder des Abstandes des zu prüfenden Prüfling zum nachfolgenden und/oder zum vorangehenden Prüfling angeordnet sind.

Diese Stabilisierungsmittel können beispielsweise Druckluftdüsen sein, die die ankommenden Prüflinge in ihrer Zuführbewegung beeinflussen, z.B. abbremsen, um sie in ihrer Lage zu stabilisieren. Nach der Lagestabilisierung kann es vorgesehen sein, dass gegebenenfalls zusätzlich angeordnete Druckluftdüsen eine Beschleunigung des Prüflings bewirken, wobei diese Beschleunigung vorzugsweise keine Lageinstabilität des Prüflings bewirkt. Das heißt, der Prüfling behält seine Zuführrichtung bei, ohne jedoch über seine Körperachse Rotations- und/oder Torkelbewegungen aufzunehmen, wie er sie zuvor bei der Zuführung durch den Linearförderer innehatte. Die Körperachse ist dabei, im Beispiel einer Schraube, so zu verstehen, dass diese auf die Längsachse der Schraube bezogen ist.

Als Stabilisierungsmittel können aber durchaus auch andere Mittel eingesetzt werden, wie z.B. Magnetfelder, die die Prüflinge entsprechend stabilisieren und führen können.

In einer demgegenüber weitergebildeten Ausführungsform kann es vorgesehen sein, dass an der Förderstrecke Mittel zur Erfassung von Parametern, insbesondere der Transportgeschwindigkeit und/oder der Lage und/oder dem Abstand des zu prüfenden Prüflings zum nachfolgenden und/oder zum vorangehenden Prüfling angeordnet sind. Dadurch wird es beispielsweise möglich, die Transportbewegung der Prüflinge zu erfassen und die Stabilisierungsmittel gezielt anzusteuern, um eine stabile Führung der Prüflinge im Prüfund/oder Sortierprozess zu gewährleisten.

In einer weiteren Ausführungsform kann es vorgesehen sein, dass an der Förderstrecke von der Zuführvorrichtung getrennte Gleitmittel, vorzugsweise Gleitschienen zur Förderung der Prüflinge angeordnet sind.

Durch solche Gleitschienen können die Prüflinge gezielt in ihrer Transportbewegung beruhigt und somit stabilisiert werden und zur Bilderfassung in den Bereich für die Bilderfassung weitergeleitet werden.

In einer demgegenüber abgewandelten Ausführungsform kann es vorgesehen sein, dass an den Gleitschienen Gleitflächen ausgebildet sind, die in Förderrichtung bezüglich des Förderniveaus eine Krümmung aufweisen, vorzugsweise eine kreisbogenförmige Krümmung.

Durch eine solche Krümmung der Gleitflächen ist es möglich, den Prüfling über die Formgebung der Gleitflächen gezielt zu beschleunigen, so dass er eine Abstandsvergrößerung zum nachfolgenden Prüfling durch eine Geschwindigkeitserhöhung erfährt. Die Krümmung ist dabei bezogen auf das Förderniveau vorzugsweise nach unten hin zunehmend ausgebildet, so dass dadurch eine möglichst gleichmäßige Beschleunigung für den Prüfling gewährleistet ist.

Es ist aber auch denkbar, dass die Gleitflächen der Gleitschienen mehr als eine Krümmung aufweisen, wobei sie beispielsweise über die Gesamtlänge hinweggesehen, von der Seite betrachtet, die Form einer Sprungschanze aufweisen. Es sind aber durchaus auch noch weitere Formgebungen für die Gleitschienen denkbar, die sich positiv auf die Transportbewegungen der Prüflinge auswirken.

In einer weiteren Ausführungsform ist es vorgesehen, dass an den Gleitschienen Schlitze und/oder Bohrungen angeordnet sind, durch welche eine direkte und/oder indirekte Einwirkung auf die Prüflinge und/oder eine auf sie bezogene Parametererfassung möglich ist.

Durch die Ausbildung solcher Schlitze oder Bohrungen an den Gleitschienen ist es möglich, an einer beliebigen Stelle entweder auf den Prüfling einzuwirken oder einen Parameter von ihm zu erfassen. Parameter sind z.B. die Geschwindigkeit, die Lage oder auch eine Bewegung des Prüflings, wozu geeignete Mittel für die Erfassung der Parameter durch diese Schlitze und/oder Bohrungen Zugang zu den Prüflingen haben.

Das Gleiche gilt natürlich auch für die Stabilisierungsmittel, die durch diese Bohrungen und/oder Schlitze auf die Prüflinge entsprechend einwirken können.

In einer demgegenüber abgewandelten Ausführungsform kann es vorgesehen sein, dass in Förderrichtung gesehen an den Enden der Gleitschienen Spitzen ausgebildet sind, so dass eine unverdeckte Bilderfassung der Prüflinge möglich ist. Eine unverdeckte Bilderfassung ist deshalb von Vorteil, da dann alle sichtbaren Kanten und Konturen des Prüflings durch die Bildverarbeitung erfasst und anschließend ausgewertet werden können.

Die Ausbildung von Spitzen an den Enden der Gleitschienen ermöglicht somit, dass die Prüflinge sogar dann, wenigstens im Wesentlichen unverdeckt durch die Kamera erfasst werden können, wenn die Prüflinge noch an der Spitze hängen, wie beispielsweise eine zu prüfende Schraube mit dem Kopf, welcher jedoch aufgrund der nach unten weisenden Krümmung der Gleitflächen nur an einem Punkt, nämlich der Spitze auf der Gleitschiene aufliegt. Dadurch ist es möglich, nahezu die gesamte Kontur des Prüflings durch die Bildverarbeitung zu erfassen.

Besonders vorteilhaft ist es, wenn die unterhalb der Spitze ausgebildete Abschlusskante der Gleitschiene eine zu ihrem Körper hin gesehen konkave Form zur Verlängerung der Seitenwände in Richtung zu den Spitzen hin aufweist. Dadurch wird eine umso länger wirkende Führung für den Prüfling erreicht, je kürzer dieser ist. Diese Maßnahme wirkt sich wegen der mit abnehmender Körperlänge des Prüflings einhergehenden, zunehmenden Bewegungsfreiheit für Schwenkund Torkelbewegungen zusätzlich stabilisierend aus.

In einer wiederum weiteren Ausführungsform ist es vorgesehen, dass an der Förderstrecke Verstellmittel für die Gleitschienen angeordnet sind, durch welche eine Einwirkung auf deren Position zueinander und/oder in Bezug auf die Koordinaten der Vorrichtung möglich ist.

Solche Verstellmittel können beispielsweise Spindeln sein, die gegebenenfalls mit Motoren oder anderen Aktoren angetrieben werden können. Durch das Verstellen der Gleitschienen gegeneinander kann beispielsweise eine Abstandsveränderung der beiden Gleitschienen zueinander erfolgen. Somit können Prüflinge mit unterschiedlichen Konturen, beispielsweise Schrauben mit kleineren und größeren Durchmessern, der Bildverarbeitung zugeführt werden.

Es ist aber auch möglich, dass die Verstellmittel als Pneumatik- oder Hydraulikzylinder ausgebildet sind, die ebenfalls entsprechend angesteuert werden können. Wenn erforderlich, kann es auch vorgesehen sein, dass zusätzlich noch Messmittel oder Sensoren angeordnet sind, die den Abstand zwischen den Gleitschienen feststellen und entsprechende Signale an die Motoren oder Aktoren liefern, so dass vorwählbare Abstände eingestellt werden können. Neben einer automatischen Verstellung der Gleitschienen, vorzugsweise unter Berücksichtigung der Körperform des Prüflings, kann selbstverständlich auch eine manuelle Verstellung vorgesehen sein.

Im Weiteren ist es auch möglich, dass die Verstellmittel die Gleitschienen durch eine Kippbewegung oder eine Drehbewegung gegenüber den Koordinaten der Vorrichtung in der Lage verändert, so dass beispielsweise eine steilere oder flachere Ausrichtung der Gleitflächen der Gleitschienen erreicht wird. Dadurch kann eine zusätzliche Einflussnahme auf die Geschwindigkeit der Prüflinge erreicht werden.

In einer nächsten Ausführungsform kann es vorgesehen sein, dass wenigstens eine Kamera für die Bilderfassung des Prüflings vorhanden ist, insbesondere in Zusammenwirkung mit einer Belichtungsvorrichtung, wobei die Kamera vorzugsweise für Aufnahmen im nicht sichtbaren Längenbereich geeignet ist.

Mit einer Kamera können beispielsweise die Seitenansicht des Prüflings und dessen Konturen erfasst werden und darauf aufbauend eine Überprüfung der geforderten Qualitätskriterien erfolgen. Die Erfassung des Bildes durch die Bildverarbeitung erfolgt vorzugsweise möglichst unter Echtzeitbedingungen. Das heißt, die Prüflinge lösen beim Passieren des Bildverarbeitungssystems ein Signal aus, anhand dessen die Kamera ein Bild von dem Prüfling erfasst. Dieses Signal kann beispielsweise durch Lichtschranken generiert werden, welche die Prüflinge passieren. Die Lichtschranken sind dabei vorteilhafterweise so angeordnet, dass sie die Bilderfassung für den Prüfling möglichst nicht stören. Dazu können sie in einem Winkel gegenüber der Förderrichtung des Prüflings und der optischen Achse der Kamera angeordnet sein. Der Winkel für die Ausrichtung der Lichtschranken ist somit vorzugsweise schräg gegenüber der Fläche ausgerichtet, die durch die beiden Koordinaten, Bewegungsrichtung/optische Achse, beschrieben wird. Die optische Achse ist dabei vorteilhafterjedoch nicht zwingenderweise etwa im rechten Winkel gegenüber der Förderrichtung des Prüflings ausgerichtet.

Als besonders vorteilhaft hat es sich herausgestellt, die Prüflinge knapp unterhalb einer lokalen Verdickung, wie sie beispielsweise ein Schraubenkopf darstellt, zu detektieren. In diesem Konturbereich des Prüflings ist jederzeit gewährleistet, dass keine Überdeckung mit einem weiteren Prüfling für das Detektionsmittel erkennbar ist. Auch dann, wenn beispielsweise zwei Schrauben vollkommen aneinandergefügt, mit aufeinanderliegenden Köpfen das Detektionsmittel passieren, ist ein für eine einwandfreie Detektion ausreichend großer Abstand zwischen den beiden Schäften gegeben.

In dieser bevorzugten Ausführungsform kann es also vorgesehen sein, dass die Detektionsvorrichtung für die Auslösung des Belichtungssignals für die Kamera genau auf der Höhe angeordnet ist, auf welcher der Prüfling entlang seines Förderweges durch die Kamera erfasst wird. Dies hat den Vorteil, dass unterschiedliche Geschwindigkeiten in der Förderbewegung nahezu keine Einwirkung auf den Ort der Abbildung des Prüflings auf dem zu erfassenden Bild hat. Dadurch kann die Kamera so eingestellt werden, dass der Prüfling jeweils etwa in der Mitte des Bildes abgelichtet ist und somit eine einwandfreie Überprüfung der Qualitätskriterien durchgeführt werden kann. Zur Änderung des Aufnahmezeitpunktes kann die Position der Detektionsvorrichtung entlang des Förderweges für die Prüflinge so verschoben werden, dass eine optimale Bilderfassung möglich ist.

Das von dem Prüfling zu erfassende Bild wird dazu vorzugsweise an der Stelle des Förderweges aufgenommen, an welcher er vollkommen unverdeckt ist. Dies ist der Bereich, der sich direkt an die Förderstrecke anschließt, mittels derer die Prüflinge in ihrer Zuführbewegung stabilisiert werden.

In der bevorzugten Ausführungsform, in welcher die Förderstrecke Gleitschienen aufweist, ist das der Bereich, der sich an die Enden der Gleitschienen, also an deren Spitzen anschließt. In diesem Bereich befinden sich die Prüflinge im freien Fall und werden somit von keinem Vorrichtungsteil abgedeckt, so dass ihre Konturen vollkommen frei erkennbar sind.

Da die Bildverarbeitung in Echtzeit erfolgt, muss für jeden, die Kamera passierenden Prüfling ein Bild erfasst werden, welches durch eine sehr schnelle Auswertevorrichtung ausgewertet und mit vorgegebenen Prüfkriterien verglichen werden kann. Das Ergebnis dieses Vergleichs kann einer weiteren Vorrichtung zur Verfügung gestellt werden, die entsprechende Signale an den weiteren Förderverlauf des Prüflings beeinflussende Mittel weiterleitet. Die Ausbildung einer getrennten Einheit für eine solche Steuerung ist möglich, jedoch nicht zwingend erforderlich.

In einer demgegenüber abgewandelten Ausführungsform kann es vorgesehen sein, dass das Signal für die Bilderfassung mittels einer Zeitfenster-Steuerung realisiert wird. Das heißt, eine Detektoreinheit, beispielsweise ebenfalls eine Lichtschranke, ist stromaufwärts beabstandet von der optischen Achse angeordnet und sendet ein Signal an eine entsprechende Einheit, wenn der Prüfling diese Stelle des Förderwegs passiert. Dadurch kann eine Zeitverzögerung ausgelöst werden, nach deren Ablauf die Kamera ein Bild erfasst. Die Zeitverzögerung kann dabei so vorgewählt werden, dass der Prüfling exakt in der Mitte des erfassten Bildes abgebildet wird. Diese Ausführungsform ist dann vorteilhaft, wenn alle Prüflinge die gleiche Fördergeschwindigkeit aufweisen. Dadurch ergibt sich über den jeweils gleichen Weg die gleiche Position des Prüflings in der Abbildung durch die Bilderfassung.

Durch die Variierung der Triggerung für die Bilderfassung ist es möglich, den Zeitpunkt der Bilderfassung zu beeinflussen. Somit ist es auch möglich, wenn dies gewünscht wird, das Bild zu dem Zeitpunkt aufzunehmen, wenn der Prüfling gerade noch an der Spitze der Gleitschiene hängt. Bei stabiler Fördergeschwindigkeit ist es aber auch bei der zeitgesteuerten Triggerung vorteilhaft, dass die Bilderfassung mit einem gewissen Abstand zwischen dem Prüfling und der Spitze der Gleitschienen erfolgt. Die Position, an welcher das Bild schlussendlich erfasst wird, ist somit aber über einen gewissen Bereich entlang des Förderweges des Prüflings mehr oder weniger frei wählbar. Die Auswahl der Position, in welcher das Bild aufgenommen wird, kann gegebenenfalls von weiteren Anforderungen im Prüfungsverfahren abhängig sein.

Mittels einer weiteren Kamera kann es beispielsweise vorgesehen sein, dass eine weitere Ansicht des Prüflings aufgenommen wird, die beispielsweise 90 Grad gegenüber der Ausrichtung der ersten Kamera gedreht ist. Dadurch kann beispielsweise ein Prüfling in der Form einer Schraube auf die korrekte Ausbildung der im Schraubenkopf angeordneten Kraftübertragungsausnehmung, wie einen Schraubenschlitz, einen Kreuzschlitz und dergleichen, mehr überprüft werden.

Ein Bildverarbeitungsverfahren im nicht sichtbaren Wellenlängenbereich hat den Vorteil, dass dieses streulichtunempfindlich ist und somit unabhängig von dem umgebenden Licht arbeitet.

In einer weiteren Ausführungsform kann es vorgesehen sein, dass eine Auswertevorrichtung für die von der Bilderfassung gewonnenen Daten und für die Beurteilung des Prüflings auf der Grundlage vorgebbarer Prüfkriterien vorhanden ist.

Durch eine solche Auswertevorrichtung können beispielsweise weitere Verfahrens- oder Prozessschritte, abhängig von einem bestimmten Ergebnis angestoßen werden.

In einer anderen Ausführungsform kann es vorgesehen sein, dass eine Erkennungsvorrichtung für die Lage des Prüflings in einem von der Kamera erfassten, auszuwertenden Bild vorhanden ist.

Dadurch ist es möglich, ein gegenüber dem Koordinatensystem der Vorrichtung gedreht ausgerichtetes Koordinatensystem in das Bild zu legen, welches sich beispielsweise parallel zur Längsachse des Prüflings ausrichten lässt. Dadurch werden dann die Grundlagen für die Auswertung der Bilddaten gelegt, beispielsweise für die Längenerfassung oder die Konturkontrolle für den Prüfling und dergleichen mehr.

In einer nächsten Ausführungsform kann es vorgesehen sein, dass eine Ausschleusvorrichtung zur Einflussnahme auf den Transportweg des Prüflings vorhanden ist.

Eine solche Ausschleusvorrichtung kann beispielsweise eine Düse sein, mittels welcher Druckluft auf den Prüfling an der Ausschleusstelle gerichtet wird, so dass dessen Transportweg geändert wird. So kann beispielsweise ein sich im freien Fall befindlicher Prüfling in der Form einer Schraube von dem Druckluftstrahl so getroffen werden, dass der Strahl auf die Oberfläche des Kopfes gerichtet ist. Dadurch erfährt die Schraube eine Beschleunigung in ihrer Längsachse, so dass der Bewegungsablauf des schrägen Wurfs abrupt unterbrochen und die Schraube auf eine andere Flugbahn gelenkt wird. Durch diese Umlenkung ist es beispielsweise möglich, die Schraube in ein Behältnis zu befördern, in welches nur für in Ordnung befundene Teile gelangen sollen. Die Teile, die für nicht in Ordnung befunden werden, können beispielsweise ohne Änderung ihrer Flugbahn bzw. Fallrichtung in ein anderes Behältnis zur Aufnahme für nicht in Ordnung befundene Teile gelangen.

Selbstverständlich sind auch andere Mittel für eine Ausschleusung der Prüflinge denkbar, wie z.B. Magnetfelder oder dergleichen mehr. Wichtig ist dabei nur, dass jeder einzelne Prüfling exakt nach den Beurteilungskriterien beeinflusst werden kann, in Ordnung bzw. nicht in Ordnung.

Das Signal für die Ausschleusung jedes einzelnen Prüflings wird in vorteilhafter Weise ebenfalls mittels Lichtschranken generiert, und besonders vorteilhaft mittels mehrerer zu einem Lichtvorhang zusammengefasster Lichtschranken. Damit kann trotz variierender Falllinien der Prüflinge, aufgrund unterschiedlicher Transportgeschwindigkeiten, eine exakte Aussortierung erreicht werden.

In einer weiteren Ausführungsform kann es vorgesehen sein, dass eine Stückzahlkontrolle zur Überwachung des kontrollierten und/oder sortierten Prüflings vorhanden ist.

Durch eine solche Überwachung ist es beispielsweise möglich zu überprüfen, ob der Prüfling in das richtige Aufnahmebehältnis transportiert wurde. Dadurch ist es beispielsweise nebenbei möglich, zu überprüfen, ob die Ausschleusvorrichtung einwandfrei funktioniert.

Zusätzlich ist es auch möglich, festzustellen, ob alle Prüflinge im richtigen Behältnis angekommen sind. Diese Prüfung ist ganz gezielt für jeden einzelnen Prüfling möglich. Dies auch bei der hohen Durchsatzrate von beispielsweise 21 Stück pro Sekunde. Sobald festgestellt wird, dass eine Schraube nicht richtig in das für sie vorgesehene Behältnis gelangt ist, kann der Prüf- und/oder Sortierprozess unterbrochen werden. Unter der Berücksichtigung, dass das Medium zum Ausschleusen der Prüflinge Druckluft ist, ist die durch die beschriebenen Maßnahmen erreichte hohe Anzahl geprüfter und richtig erkannter Prüflinge umso beachtlicher.

Zur Überprüfung, ob der jeweilige Prüfling in das richtige Behältnis gelangt ist, können beispielsweise Lichtschranken eingesetzt werden. Solche Lichtschranken können als Einzelaufbauten, als mehrere einzelne oder auch beispielsweise als Lichtvorhänge ausgebildet sein.

Um die Vorrichtung zum Sortieren möglichst kompakt aufzubauen, ist es vorteilhaft, die optischen Strahlengänge in ihrem Verlauf umzulenken. Als optische Strahlen werden grundsätzlich alle elektromagnetisch beeinflussbaren Strahlen verstanden, die im Zusammenhang mit dem Bildverarbeitungssystem verwendet werden, insbesondere die Strahlen der jeweiligen Belichtungseinheit der eingesetzten Kameras, sowie auch die Strahlen der Lichtschranken.

Durch das Umlenken der Strahlengänge können die Kamera und/oder der Belichter in platzsparender Weise, vorzugsweise senkrecht in einem entsprechend geeigneten Schrank untergebracht werden.

Als Umlenkeinheit für die elektromagnetisch beeinflussbaren Strahlengänge ist vorzugsweise ein Prisma vorgesehen. Dieses Prisma kann so ausgerichtet werden, dass es gleichzeitig mehrere Strahlengänge umlenkt. Dadurch ist eine weitere Reduzierung im Platzbedarf der Sortiervorrichtung möglich. Insbesondere ist es möglich, neben dem Strahlengang für das Bilderfassungssystem auch den Strahlengang der Lichtschranke für die Detektierung des Prüflings durch diese Umlenkeinheit zu beeinflussen. Dies ist insbesondere deshalb vorteilhaft, da bei dem hohen Verarbeitungstakt der Sortiervorrichtung bevorzugt kurze, wenn möglich sogar gar keine Zeitversätze zwischen der Detektierung des Prüflings und dessen Erfassung durch das Bildsystem zu realisieren sind.

Durch die Verwendung der Umlenkeinheit ist es somit möglich, den Strahlengang der detektierenden Lichtschranke auf gleiche Höhe mit dem Strahlengang zwischen Belichter und Kamera auszurichten, bezogen auf die Position der Bilderfassung entlang des Förderwegs des Prüflings.

Selbstverständlich können auch mehrere Umlenkeinheiten für elektromagnetisch beeinflussbare Strahlengänge in der Vorrichtung angeordnet werden.

Ein weiterer Vorteil dieser kompakten Bauweise liegt darin, dass keine Einheiten oder Bauelemente der Vorrichtung seitlich von einem entsprechenden Schrank vorstehen und somit gegen mögliche Beschädigung geschützt sind.

Ein weiterer Schutz der Vorrichtung dient dem Schutz gegen Verschmutzung. Dazu ist eine Schutzvorrichtung vorgesehen, die auch insbesondere zum Schutz der aktiven und/oder passiven Elemente der Bildverarbeitung ausgebildet ist, also sowohl zum Schutz des Belichter-Kamerasystems als auch insbesondere der Lichtschranken. Bei dieser Schutzvorrichtung handelt es sich vorzugsweise um einen Schutzkörper, der im Bereich um die Oberflächen der optischen Elemente herum angeordnet ist, und in seinem Inneren einen Schutzraum ausbildet. Beispielsweise kann es sich dabei um einen hohlen Körper mit offenem Boden- und Deckenbereich handeln. Dieser Schutzraum ist in Richtung der Strahlengänge durchlässig, vorzugsweise geöffnet. Dadurch können die optischen Strahlen ungehindert durch den im Schutzkörper ausgebildeten Schutzraum hindurchgehen.

Die Funktion des Schutzraums besteht nun darin, dass in ihm ein Überdruck erzeugt wird, vorzugsweise mittels gereinigter Druckluft, die Schmutzpartikel daran hindert, in diesen Bereich einzudringen und sich darin abzulagern.

Somit sind die optisch wirksamen aktiven und passiven Elemente permanent vor Verschmutzungen geschützt.

Die Zuleitung der gereinigten Druckluft erfolgt über Druckluftleitungen, die mittels Einblasöffnungen in den Schutzraum hineinmünden. Die durch den Überdruck aus dem Schutzraum ausströmende Druckluft entweicht über die am Schutzkörper stirnseitig angeordnete Ausblasöffnung, die auch sicherstellt, dass die Strahlenführung nicht beeinflusst wird.

In einer abgewandelten Ausführung kann auch ein den Strahlengang nicht oder nur geringfügig behinderndes Material abdeckend vor den optischen Elementen angeordnet sein. In diesem Fall muss für die Reinhaltung der betreffenden Sichtfläche gesorgt werden, vorzugsweise wieder mittels Druckluft.

Zur weiteren Flexibilisierung der Vorrichtung kann vorzugsweise eine Halterung vorgesehen sein, die mit einem Verstellmittel für die aktiven und/oder passiven Elemente der Bildverarbeitung ausgebildet ist. Damit ist es möglich, entweder die Kamera, oder auch Einheiten der Lichtschranken in Bezug zueinander zu verstellen, so dass eine optimale Positionierung der einzelnen Einheiten möglich ist. Die Verstellmöglichkeit kann dazu sowohl in Längsrichtung erfolgen, also eine lineare Verstellung, es kann aber auch eine Drehbewegung für eine rotierende Verstellung vorgesehen sein. Selbstverständlich ist auch eine Kombination beider Möglichkeiten denkbar.

Als weiteres Merkmal kann die Halterung auch so ausgebildet sein, dass sie mehrere Elemente der Bildverarbeitung aufnehmen kann, beispielsweise verschiedene Kameras. Durch ein Verschwenken oder Verschieben der Halterung ist es dann möglich, die Vorrichtung zum Sortieren von Prüflingen innerhalb kürzester Zeit von einem Betriebszustand in einen anderen zu überführen, und somit beispielsweise von einem Prüfverfahren in ein anderes zu wechseln. Somit entsteht eine multifunktionale Prüfvorrichtung.

Ein Ausführungsbeispiel der Erfindung ist in den Zeichnungen dargestellt und wird anhand der Figuren nachfolgend näher erläutert. Im Einzelnen zeigen:
- Figur 1: eine schräge Draufsicht auf eine erfindungsgemäße Vorrichtung zum Sortieren von vereinzelten Prüflingen mittels Bildverarbeitung,
- Figur 2: eine weitere schräge Draufsicht auf die erfindungsgemäße Vorrichtung von der gegenüberliegenden Seite, wie in Figur 1 dargestellt,
- Figur 3: eine schematische Seitenansicht der Vorrichtung,
- Figur 4: eine Detailansicht aus der Seitenansicht der Figur 3,
- Figur 4a: eine schräge Draufsicht auf eine weitere Ausführungsform;
- Figur 5: eine Ansicht eines abgebildeten Prüflings;
- Figur 6: eine weitere Detailansicht in schräger Draufsicht auf die Vorrichtung,
- Figur 7: eine perspektivische Draufsicht auf einen Lichtvorhang in der Form mehrerer, etwa parallel zueinander ausgerichteter Lichtschranken mit daran angeordneten Schutzvorrichtungen gegen Verschmutzung,
- Figur 8: eine perspektivische Draufsicht auf eine erfindungsgemäße Vorrichtung in schematischer Darstellung; und
- Figur 9-11: zeigen eine weitere Ausführungsform der erfindungsgemäßen Vorrichtung in unterschiedlichen Ansichten.

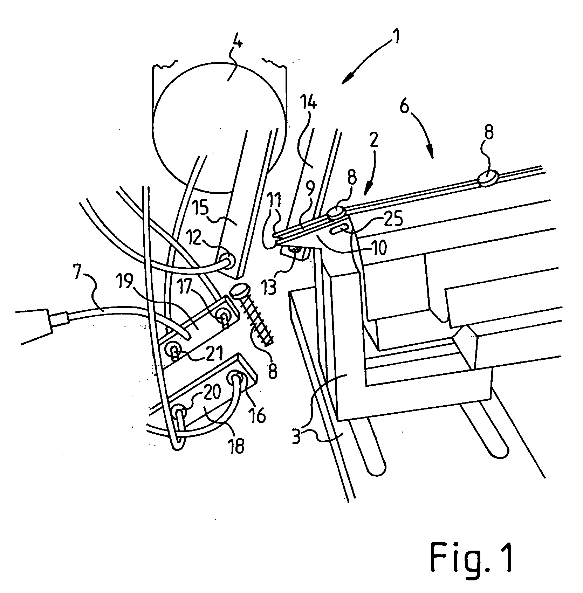

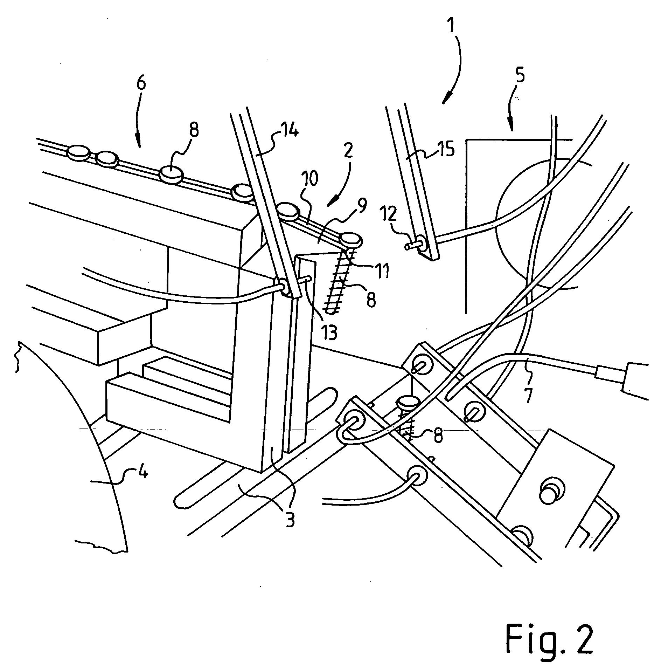

Die Figuren 1 und 2 zeigen jeweils eine schräge Draufsicht auf eine Vorrichtung 1 zum Sortieren von vereinzelten Prüflingen 8 mittels einer Bildverarbeitung. Die schrägen Draufsichten sind jeweils von gegenüberliegenden Seiten gesehen dargestellt.

Die mittels der Zuführvorrichtung 6 zugeführten Prüflinge 8 werden an die Förderstrecke 2 der Vorrichtung 1 übergeben. Die Förderstrecke 2 besteht aus zwei Gleitschienen 9 und 10, die etwa parallel nebeneinander angeordnet sind und nicht in Kontakt mit der Zuführvorrichtung 6 stehen. Dadurch können die Rüttelfrequenzen des Linearzuförderers, im vorliegenden Fall des Vibrationsförderers, nicht auf die Förderstrecke 2 übertragen werden. Dadurch wirkt die Förderstrecke 2 als Beruhigungsstrecke für die Prüflinge 8.

Die Gleitschienen 9 und 10 der Förderstrecke 2 sind an Aufnahmen 3 befestigt angeordnet.

Die Prüflinge 8 werden entlang der Zuführvorrichtung 6 der Vorrichtung 1 zugeführt, über die Förderstrecke 2 beruhigt weitergeführt und in den Aufnahmebereich der Kamera 4 bewegt, der sich um den Bereich der Spitzen 11 der Gleitschienen 9 und 10 herum befindet. Der Belichter 5 (Figur 2) ist in diesem Fall ein Gegenlichtbelichter und entsprechend auf der gegenüberliegenden Seite der Kamera 4 in der Vorrichtung 1 angeordnet.

Die Prüflinge 8 erfahren auf ihrem Prüfweg nach dem Passieren der Spitzen 11 der Gleitschienen 9 und 10 einen freien Fall in der Form eines schrägen Wurfs. Dabei passieren sie die Ausschleusvorrichtung 7, die im vorliegenden Fall als Druckluftdüse ausgebildet ist.

Die Triggerung für die Bilderfassung wird durch eine Lichtschranke 12, 13 initiiert, welche an einer Halterung 14, 15 montiert ist. Die Lichtschranke 12, 13 ist dabei so ausgerichtet, dass sie die Erfassung des Prüflings 8 durch die Kamera 4 möglichst nicht behindert.

Außerdem sind noch zwei Lichtschranken 16, 17 und 20, 21 dargestellt, die der Auswerteeinheit Detektionssignale liefern. Diese Lichtschranken sind an Halterungen 18, 19 montiert.

In Figur 1 ist zwischen der Förderstrecke 2 und den Lichtschranken 16, 17 und 20, 21 sowie der Ausschleusvorrichtung 7 ein sich im freien Fall befindlicher Prüfling 8 zu erkennen. Die Kurve des schrägen Wurfs, die der Prüfling im Fall beschreibt, ist genau so ausgerichtet, dass er vor der Druckluftdüse der Ausschleusvorrichtung 7 vorbeiführt.

In der Gleitschiene 10 ist zusätzlich noch ein Schlitz 25 zu erkennen, der einen Zugang zum Schaft des Prüflings 8, in diesem Fall der Schraube, ermöglicht.

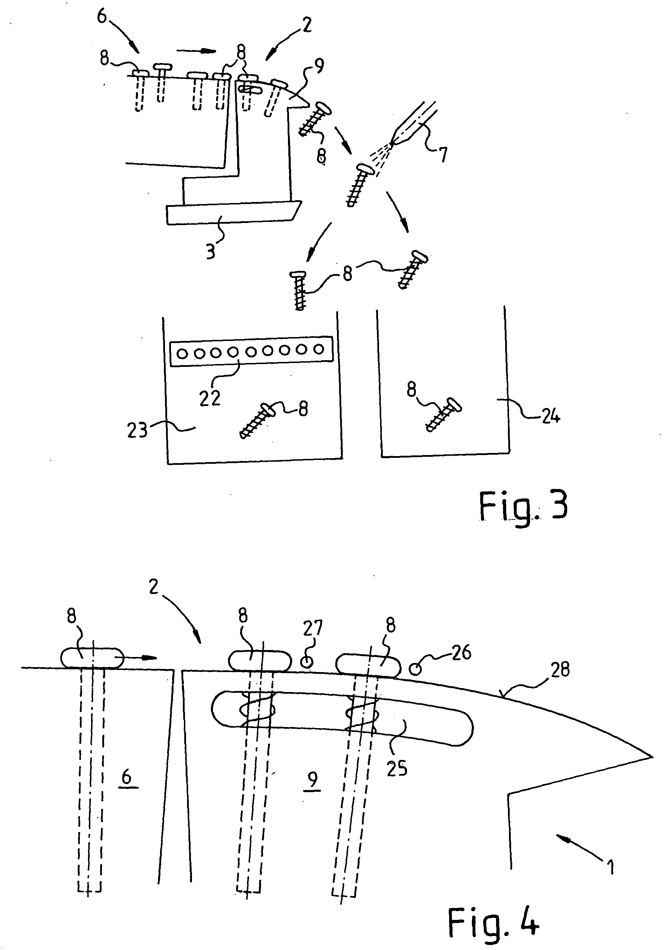

Die Figur 3 zeigt eine schematische Seitenansicht im Aufbau der Förderstrecke 2, welche in Förderrichtung für die Prüflinge 8 an die Zuführvorrichtung 6 anschließt, ohne dass sie diese jedoch berührt. In dieser Darstellung ist die Förderstrecke 2, von der lediglich die Gleitschiene 9 sichtbar ist, in einer gegenüber den Darstellungen in den Figuren 1 und 2 abgeänderten Form an der Aufnahme 3 befestigt.

Entlang des dargestellten Bewegungsablaufs der Prüflinge 8, die nach Passieren der Förderstrecke 2 auf der Bahn eines schrägen Wurfs nach unten fallen, ist beabstandet davon die Ausschleusvorrichtung 7 in der Form einer Druckluftdüse skizziert dargestellt. In dieser Position ist gezeigt, dass die Druckluft auf die sich gerade vor der Düse befindende Schraube, welche den Prüfling 8 darstellt, Druckluft geblasen wird, so dass die Schraube in Richtung des Lichtvorhangs 22 umgelenkt wird. Nachdem die Schraube den Lichtvorhang 22 passiert hat, fällt sie in das Aufnahmebehältnis 23, in welchem die für gut befundenen Teile landen sollen. Die unterhalb der eben beschriebenen Schraube dargestellten beiden Schrauben fallen dagegen weiter im schrägen Wurf in das Aufnahmebehältnis 24 für die Prüflinge 8, die für nicht in Ordnung befunden werden.

Für das Aufnahmebehältnis 24 ist in dieser Darstellung weder eine Lichtschranke noch ein Lichtvorhang dargestellt. Dennoch ist es möglich und in bevorzugten Ausführungsformen vorgesehen, auch hier eine Kontrolle für das Passieren des Prüflings anzuordnen.

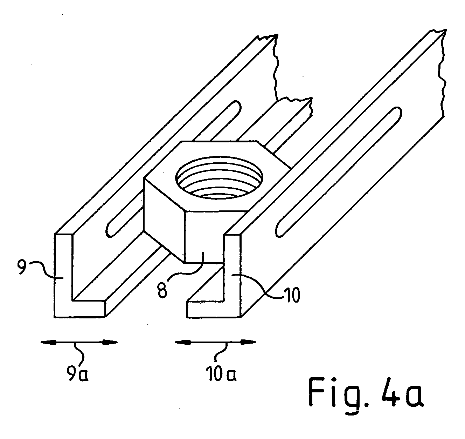

Die Figur 4 zeigt einen Detailausschnitt aus der Seitenansicht nach der Figur 3. Als wesentliches Teil ist hier die Gleitschiene 9 der Förderstrecke 2 dargestellt.

Die Figur 4a zeigt eine dahingehend abgewandelte Ausführungsform von Gleitschienen 9, 10 in schräger Draufsicht, dass damit schaftlose Prüflinge 8 wie z.B. Sechskantmuttern gefördert werden können. Die Verstellbarkeit ist symbolisch durch die Pfeile 9a, 10a gezeigt.

Die Gleitschiene 2 weist einen Schlitz 25 auf, durch den die Schäfte der beiden Prüflinge 8 zu erkennen sind. Diese Schlitze 25 können in einer besonderen Ausführungsform beispielsweise auch als Bohrungen ausgebildet sein. Es ist nicht zwingend erforderlich, dass sie durchgehend als Schlitze ausgebildet sind. Durch diese Schlitze oder Bohrungen kann direkt oder indirekt auf den Bewegungsablauf der Prüflinge 8 eingewirkt werden. Zusätzlich ist es möglich, Sensoren oder dergleichen anzuordnen, die die Bewegungsparameter der Prüflinge erfassen können.

Beispielsweise sind hier oberhalb der Gleitfläche 28 der Gleitschiene 9 zwei Lichtschranken 26, 27 angeordnet, die entsprechende Signale an die Erfassungseinheiten weitergeben.

Bezüglich der Gleitfläche 28 kann in dieser Darstellung gut erkannt werden, dass sie einen Kreisradius beschreibt. Dieser Kreisradius ist nach unten geneigt, so dass die auf der Gleitfläche 28 dahingleitenden Prüflinge 8 eine Beschleunigung und somit einen wachsenden Abstand gegeneinander erfahren. Dadurch kann bereits ohne Einwirkung zusätzlicher Mittel eine Beabstandung der einzelnen Prüflinge 8 voneinander erreicht werden, die eine deutliche Verbesserung des Ergebnisses der Bildverarbeitung bewirkt.

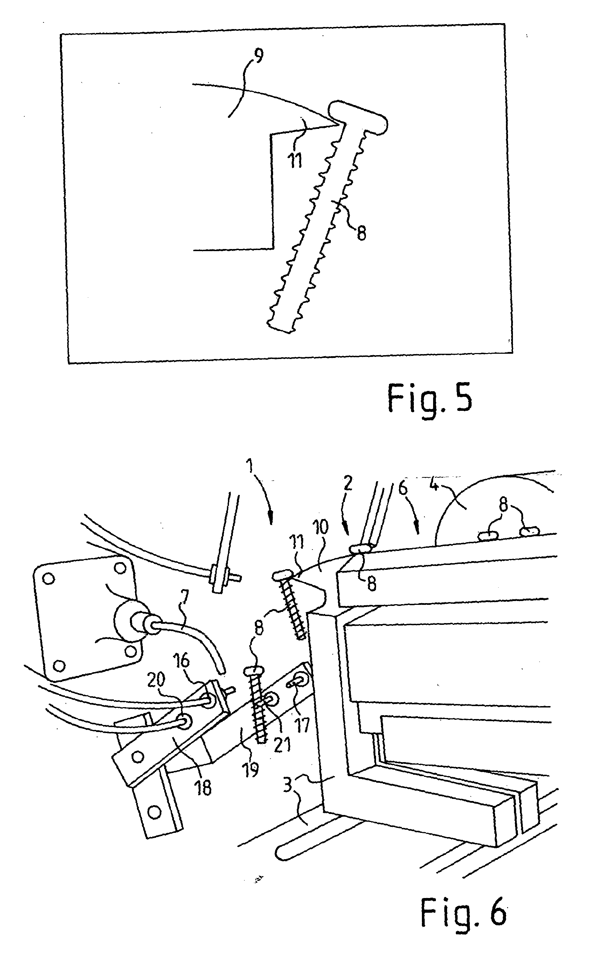

In der Figur 5 ist eine Ansicht eines abgebildeten Prüflings 8 dargestellt. Eine solche Ansicht ergibt sich durch die Aufnahme der Kamera 4, wenn der Prüfling 8 die Spitze 11 der Gleitschiene 9 passiert.

In der Figur 6 ist eine weitere Detailansicht in schräger Draufsicht auf die Vorrichtung 1 dargestellt. Im Wesentlichen ist hier wieder die Gleitschiene 10 der Vorrichtung 1 zu erkennen, an welcher ein Prüfling 8 an der Spitze 11 hängt. Schräg darunter ist ein weiterer Prüfling 8 erkennbar, der sich in Richtung der Ausschleusvorrichtung 7 fallend auf der Bahn eines schrägen Wurfs bewegt. Vor der Förderstrecke 2 ist die Zuführvorrichtung 6 dargestellt. Auch darauf sind einige Prüflinge 8 zu erkennen. Im Weiteren sind noch die Lichtschranken 16, 17 und die Lichtschranken 20, 21 sowie die Halterungen 18, 19 zu erkennen, an welchen die Lichtschranken befestigt sind.

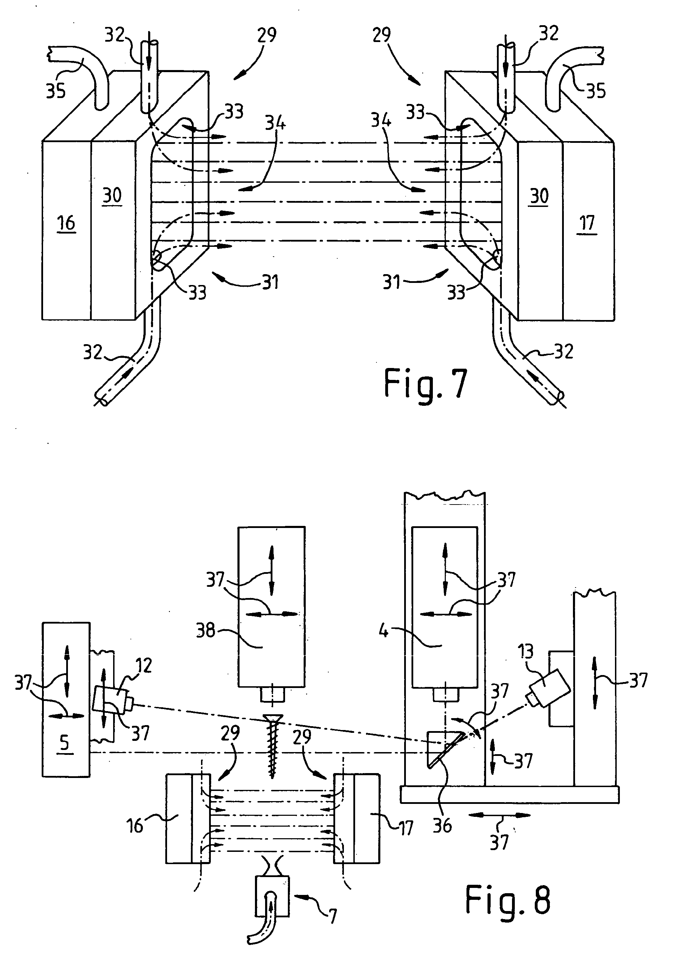

Die Figur 7 zeigt eine schematische, perspektivische Ansicht eines Lichtvorhangs in der Form von etwa parallel zueinander ausgerichteten einzelnen Lichtschranken 16, 17, auch Lichtarrays genannt, an denen in Bezug auf die Strahlen ausund eingangsseitig eine Schutzvorrichtung 29 in der Form zweier Schutzkörper 30 angeordnet ist. Im Inneren der Schutzkörper 30 sind Schutzräume 31 ausgebildet, in denen ein Überdruck an gereinigter Druckluft vorherrscht. Die Breite der Schutzräume 31 ist aus Darstellungsgründen deutlich überzeichnet. In Wirklichkeit sind sie wesentlich schmäler ausgebildet, so dass vor den Schutzkörpern 30, von den optischen Einheiten weggerichtet, ein Luftstrom ausgebildet wird, der in diesem Bereich befindliche Schmutzpartikel wegträgt. Die Druckluft wird dazu über die Druckluftleitungen 32 mit ausreichend großem Querschnitt und die in den Schutzraum 31 führenden Einblasöffnungen 33 zugeführt. Der dadurch entstehende Überdruck wird dann über die jeweils stirnseitig angeordneten Ausblasöffnungen 34 abgelassen. Der im Schutzraum vorherrschende Überdruck erzeugt den von ihm weggehenden Luftstrom, der Schmutzpartikel am Eindringen in den Schutzraum hindert. Die Lichtschranken 16, 17 sind mittels Versorgungsleitungen 35 mit weiteren Einheiten der Vorrichtung zum Sortieren von Prüflingen verbunden.

Die Figur 8 zeigt schematisch eine Draufsicht auf eine erfindungsgemäße Vorrichtung, bei der die nach Figur 7 aufgezeigten Merkmale realisiert sind. In dieser Darstellung ist lediglich an den Lichtschranken 16, 17 eine Schutzvorrichtung 29 ausgebildet. Selbstverständlich können aber weitere Schutzvorrichtungen 29 an allen möglichen, optischen Einheiten des Bilderfassungssystems im Sinne der Darlegung in Figur 7 angeordnet werden. Die Elemente 7, 16, 17, 29 sind dabei in der Zeichenebene gegenüber den übrigen Elementen zum Betrachter hin versetzt angeordnet, wie dies beispielsweise aus den Figuren 1, 2 und 6 ersichtlich ist.

Als weitere Merkmale zeigt die Figur 8 ein Prisma 36 zur Umlenkung der optischen Strahlengänge mit verschiedenen Verstellmöglichkeiten durch vertikale, horizontale und drehende Bewegungen, welche durch die Pfeile mit den Nummern 37 dargestellt sind. Die Verstellmöglichkeiten, die durch die Nummerierungen 37 gekennzeichnet sind, gelten im übrigen auch für die Kamera 4 und deren Belichter 5, für die Kamera 38 und einen in ihr integrierten Belichter, sowie auch für die Lichtschranken 12, 13. Diese Darstellung von Verstellmöglichkeiten für die einzelnen Elemente ist selbstverständlich nur beispielhaft und kann durch weitere Merkmale, beispielsweise durch eine revolvertrommelartig aufgebaute Aufnahme für mehrere Kameras erweitert werden.

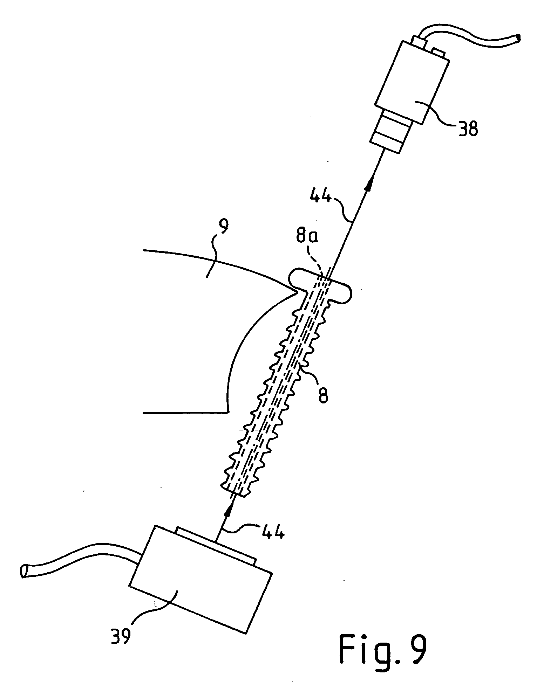

Die Figuren 9 bis 11 zeigen eine weitere Ausführungsform der vorliegenden Erfindung, bei der eine Gegenlichteinheit 39 gegenüber einer Kamera 38 derart angeordnet ist, dass ein sich zwischen diesen beiden befindlicher Prüfling im Gegenlichtverfahren geprüft werden kann. Dabei überdecken die Konturen des Prüflings die von der Gegenlichteinheit 39 abgegebenen Lichtstrahlen 44, so dass die Konturen des Prüflings 8 mit der Kamera 38 erfasst werden können. Dabei ist es auch möglich, Durchgangsöffnungen 8a, wie im vorliegenden Beispiel bei einer Hohlschraube (Figur 9) oder auch Durchgangsöffnungen bei einer Mutter, wie dargestellt, in der Figur 4a zu prüfen.

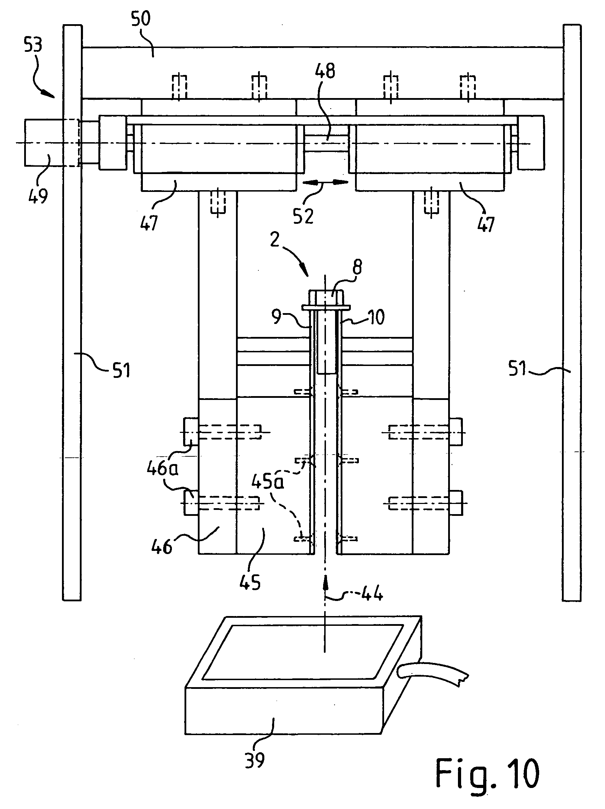

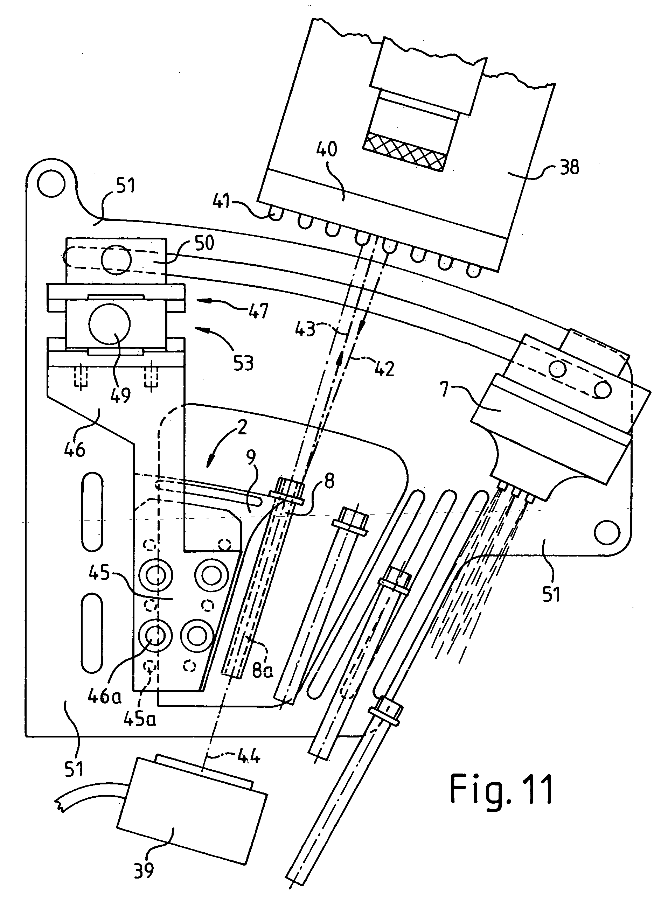

Die Figur 10 zeigt zusätzlich zur Gegenlichteinheit 39 an der Stirnseite der Kamera 38 einen Belichtungsring 40. Dieser dient zur Beleuchtung der der Kamera zugewandten Seite der Prüflinge, durch die von den Lichtquellen 41 ausgesendeten Lichtstrahlen, um den Prüfling im Auflichtverfahren zu prüfen. Der beispielhaft in der Darstellung in Figur 11 gezeigte Lichtstrahl 42 wird von der Lichtquelle 41 ausgesandt und an der Oberfläche des Prüflings 8 reflektiert und erzeugt dadurch den zur Kamera hin zurückgeworfenen Lichtstrahl 43. Der von der Gegenlichteinheit 39 ausgesandte Lichtstrahl 44 geht durch die Bohrung 8a der Hohlschraube 8 hindurch, ebenfalls zur Kamera 38. Damit ist es möglich, die Konturen der Hohlschraube sowohl innen als auch außen auf entsprechende Vorgaben hin zu überprüfen.

Ein weiterer Unterschied in dieser Ausführungsform gegenüber den vorher beschriebenen liegt in der mechanischen Befestigung der Förderstrecke 2, also im vorliegenden Fall der Gleitschienen 9 und 10. Diese werden in dem Ausführungsbeispiel der Figuren 10 und 11 bezogen auf die Förderstrecke 2 von oben her mechanisch festgehalten, wobei auch gleichzeitig eine Verstellvorrichtung 53 in diesen mechanischen Aufbau integriert ist. In der Figur 10 ist dieser Aufbau schematisch in Frontansicht dargestellt. Die Figur 11 zeigt demgegenüber eine Seitenansicht mit zusätzlich eingezeichneter Kamera 38 und daran befestigtem Beleuchtungsring 40.

In Figur 10 sind die die Förderstrecke 2 bildenden Gleitschienen 9 und 10 über Aufnahme- und Distanzblöcke 45 sowie daran anschließenden Aufnehmern 46 mit Spindel-Aufnehmern 47 verbunden.

Diese Spindelaufnehmer 47 sind Teil der Verstellvorrichtung 53. Sie greifen in das Gewinde der Spindel 48 ein, die mittels der Rändelschraube 49 eine Verstellung des Abstandes zwischen den beiden Gleitschienen 9 und 10 ermöglicht. Beispielhaft ist dazu der Pfeil 52 eingezeichnet, der zeigt, dass die beiden Gleitschienen auseinandergeführt werden können. Selbstverständlich ist es aber auch möglich, die beiden Gleitschienen 9, 10 in der entgegengesetzten Richtung zu bewegen, so dass sich eine Abstandsverringerung ergibt, insbesondere zur Prüfung von Prüflingen mit geringerem Durchmesser.

Bezüglich der Ausführungsform der Gleitschienen 9, 10 besteht auch hier selbstverständlich die Möglichkeit, derartige Gleitschienen anzubringen, die für die Überprüfungen von schaftlosen Prüflingen, wie beispielsweise eine Sechskantmutter, wie in der Figur 4a dargestellt, anzuordnen. Es besteht also innerhalb der räumlichen Möglichkeiten keine grundsätzlich Beschränkung auf die Ausführungsform der die Förderstrecke 2 ausbildenden Mittel, hier vorliegend der Gleitschienen 9 und 10. Dementsprechend können diese den Konturen der zu prüfenden Prüflingen entsprechend angepasst ausgebildet werden.

Neben der beispielhaft dargestellten Verstellvorrichtung 53 in der Form eines manuell verstellbaren Spindelantriebes sind auch noch einfacher ausgebildete Ausführungsformen, wie beispielsweise einzeln an Schienen verschiebbare und fixierbare Aufnehmer realisierbar. Grundsätzlich gibt es auch hierzu keine Beschränkungen in der Ausführungsform. Entsprechend des Einsatzbereiches der Sortiervorrichtung können mehr oder weniger hohe Integrationsgrade in der Automatisierung dieser Verstellmöglichkeit vorgesehen sein. Bei einfachen Anforderungen, die eine seltene Anpassung an die Größe der zu prüfenden Prüflinge bedingt, reicht sicherlich eine möglichst einfache Ausführungsform einer Anpassungsmöglichkeit. Bei häufig wechselnden Prüfgeometrien ist aber auch eine hohe Automatisierungsstufe denkbar, die eine automatische Abstandsanpassung der Gleitschienen 9, 10 zur Bildung des optimalen Förderweges auf der Förderstrecke 2 ermöglichen.

Der mechanische Aufbau enthält im weiteren noch den die beiden Spindel-Aufnehmer 47 tragenden Träger 50, welcher seinerseits an Seitenwangen 51 befestigt ist. Die Fixierung der Gleitschienen 9, 10 an den Aufnahme- und Distanzblöcken 45 erfolgt mittels Schrauben 45a. Die Verbindung zwischen den Aufnahme- und Distanzblock 45 und dem Aufnehmer 46 erfolgt wiederum mittels der Schrauben 46a. Die einzelnen Elemente können somit kostengünstig durch einfache Arbeitsschritte hergestellt und zusammengefügt werden.

Ein großer Vorteil dieser Ausführungsform liegt darin, dass unterhalb der Förderstrecke 2 Platz für die Anbringung in der Gegenlichteinheit 39 geschaffen wird. Dadurch ist wiederum eine unverdeckte Kontrollmöglichkeit der Prüflinge gegeben. Somit kann die Kontur des zu prüfenden Prüflings sowohl außen als auch innen, bei Vorhandensein von Durchgangsöffnungen, geprüft werden.

### Bezugszeichenliste:

- 1: Vorrichtung
- 2: Förderstrecke
- 3: Aufnahme
- 4: Kamera
- 5: Belichter
- 6: Zuführvorrichtung
- 7: Ausschleusvorrichtung
- 8: Prüfling
- 8a: Durchgangsöffnung
- 9: Gleitschiene
- 10: Gleitschiene
- 11: Spitze
- 12: Lichtschranke
- 13: Lichtschranke
- 14: Halterung
- 15: Halterung
- 16: Lichtschranke
- 17: Lichtschranke
- 18: Halterung
- 19: Halterung
- 20: Lichtschranke
- 21: Lichtschranke
- 22: Lichtvorhang
- 23: Aufnahmebehältnis
- 24: Aufnahmebehältnis
- 25: Schlitz
- 26: Lichtschranke
- 27: Lichtschranke
- 28: Gleitfläche
- 29: Schutzvorrichtung
- 30: Schutzkörper
- 31: Schutzraum
- 32: Druckluftleitung
- 33: Einblasöffnung
- 34: Ausblasöffnung
- 35: Versorgungsleitung
- 36: Prisma
- 37: Pfeile
- 38: Kamera
- 39: Gegenlichteinheit
- 40: Belichtungsring
- 41: Lichtquelle
- 42: Lichtstrahl
- 43: Lichtstrahl
- 44: Lichtstrahl
- 45: Aufnahme- und Distanzblock
- 45a: Schraube
- 46: Aufnehmer
- 46a: Schraube
- 47: Spindel-Aufnehmer
- 48: Spindel
- 49: Rändelschraube
- 50: Träger
- 51: Seitenwange
- 52: Pfeil
- 53: Verstellvorrichtung

## Patentansprüche

1. Verfahren für den Betrieb einer Vorrichtung zum Sortieren von vereinzelten Prüflingen mittels Bildverarbeitung, insbesondere von schüttbaren Werkstücken, wie Schrauben oder dergleichen, welche mittels einer Zuführvorrichtung zugeführt werden, **dadurch gekennzeichnet, dass** mittels einer zwischen der Zuführvorrichtung und einer Position zur Bildverarbeitung angeordneten Förderstrecke auf die Transportbewegung der Prüflinge eingewirkt wird.

2. Vorrichtung zum Sortieren von vereinzelten Prüflingen mittels Bildverarbeitung, insbesondere von schüttbaren Werkstücken, wie Schrauben oder dergleichen, welche mittels einer Zuführvorrichtung zugeführt werden, **dadurch gekennzeichnet, dass** zwischen der Zuführvorrichtung und einer Position zur Bildverarbeitung eine Förderstrecke zur Einwirkung auf die Transportbewegung der Prüflinge vorgesehen ist.

3. Vorrichtung nach Anspruch 2, **dadurch gekennzeichnet, dass** an der Förderstrecke Stabilisierungsmittel zur Beeinflussung der Lage und/oder der Transportgeschwindigkeit und/oder des Abstandes des zu prüfenden Prüflings zum nachfolgenden und/oder zum vorangehenden Prüfling angeordnet sind.

4. Vorrichtung nach Anspruch 2 oder 3, **dadurch gekennzeichnet, dass** an der Förderstrecke Mittel zur Erfassung von Parametern, insbesondere der Transportgeschwindigkeit und/oder der Lage und/oder dem Abstand des zu prüfenden Prüflings zum nachfolgenden und/oder zum vorangehenden Prüfling, angeordnet sind.

5. Vorrichtung nach einem der vorangehenden Ansprüche, **dadurch gekennzeichnet, dass** an der Förderstrecke von der Zuführvorrichtung getrennte Gleitmittel, vorzugsweise Gleitschienen zur Förderung der Prüflinge, angeordnet sind.

6. Vorrichtung nach einem der vorangehenden Ansprüche, **dadurch gekennzeichnet, dass** an den Gleitschienen Gleitflächen ausgebildet sind, die in Förderrichtung bezüglich des Förderniveaus eine Krümmung aufweisen, vorzugsweise eine kreisbogenförmige Krümmung.

7. Vorrichtung nach einem der vorangehenden Ansprüche, **dadurch gekennzeichnet, dass** an den Gleitschienen Schlitze und/oder Bohrungen angeordnet sind, durch welche eine direkte und/oder indirekte Einwirkung auf die Prüflinge und/oder eine auf sie bezogene Parametererfassung möglich ist.

8. Vorrichtung nach einem der vorangehenden Ansprüche, **dadurch gekennzeichnet, dass** in Förderrichtung gesehen an den Enden der Gleitschienen Spitzen ausgebildet sind, so dass eine unverdeckte Bilderfassung der Prüflinge möglich ist.

9. Vorrichtung nach einem der vorangehenden Ansprüche, **dadurch gekennzeichnet, dass** an der Förderstrecke Verstellmittel für die Gleitschienen angeordnet sind, durch welche eine Einwirkung auf deren Position zueinander und/oder in Bezug auf die Koordinaten der Vorrichtung möglich ist.

10. Vorrichtung nach einem der vorangehenden Ansprüche, **dadurch gekennzeichnet, dass** wenigstens eine Kamera für die Bilderfassung des Prüflings vorhanden ist, insbesondere in Zusammenwirkung mit einer Belichtungsvorrichtung, wobei die Kamera vorzugsweise für Aufnahmen im nicht sichtbaren Wellenlängenbereich geeignet ist.

11. Vorrichtung nach einem der vorangehenden Ansprüche, **dadurch gekennzeichnet, dass** eine Auswertevorrichtung für die von der Bilderfassung gewonnenen Daten und für die Beurteilung des Prüflings auf der Grundlage vorgebbarer Prüfkriterien vorhanden ist.

12. Vorrichtung nach einem der vorangehenden Ansprüche, **dadurch gekennzeichnet, dass** eine Erkennungsvorrichtung für die Lage des Prüflings in einem von der Kamera erfassten, auszuwertenden Bild vorhanden ist.

13. Vorrichtung nach einem der vorangehenden Ansprüche, **dadurch gekennzeichnet, dass** eine Ausschleusvorrichtung zur Einflussnahme auf den Transportweg des Prüflings vorhanden ist.

14. Vorrichtung nach einem der vorangehenden Ansprüche, **dadurch gekennzeichnet, dass** eine Stückzahlkontrolle zur Überwachung des kontrollierten und/oder sortierten Prüflings vorhanden ist.

15. Vorrichtung nach einem der vorangehenden Ansprüche, **dadurch gekennzeichnet, dass** eine Umlenkeinheit, vorzugsweise ein Prisma, zur Umlenkung von elektromagnetisch beeinflussbaren Strahlengängen von der Bildverarbeitung zugeordneten, aktiven und/oder passiven Elementen vorhanden ist.

16. Vorrichtung nach einem der vorangehenden Ansprüche, **dadurch gekennzeichnet, dass** eine Schutzvorrichtung gegen Verschmutzung der Vorrichtung zum Sortieren vorhanden ist, insbesondere zum Schutz aktiver und/oder passiver Elemente die der Bildverarbeitung zugeordnet sind.

17. Vorrichtung nach einem der vorangehenden Ansprüche, **dadurch gekennzeichnet, dass** eine Halterung mit Verstellmittel für der Bildverarbeitung zugeordnete aktive und/oder passive Elemente vorhanden ist, wobei das Verstellmittel insbesondere längenverstellbar und/oder rotierend verstellbar ist, und die Halterung vorzugsweise zur Aufnahme mehrerer solcher Elemente geeignet ist.
